(19) Europäisches Patentamt
European Patent Office
Office européen des brevets

(11) Publication number: **0 118 171 B1**

(12) # EUROPEAN PATENT SPECIFICATION

(45) Date of publication of patent specification: **22.03.89**

(21) Application number: **84300311.2**

(22) Date of filing: **18.01.84**

(51) Int. Cl.[4]: **C 08 G 18/62**, C 08 G 18/48, C 08 G 18/10, C 08 G 18/69, C 08 L 75/08

(54) **Production of polyurethane-forming components having free-isocyanate or hydroxy groups.**

(30) Priority: **04.03.83 US 472341**
**04.03.83 US 472344**

(43) Date of publication of application:
**12.09.84 Bulletin 84/37**

(45) Publication of the grant of the patent:
**22.03.89 Bulletin 89/12**

(84) Designated Contracting States:
**BE DE FR GB IT NL**

(56) References cited:
**DE-A-2 530 676**
**DE-B-2 746 789**
**GB-A-1 194 723**
**US-A-3 758 426**
**US-A-3 792 003**
**US-A-4 316 991**

**PATENT ABSTRACTS OF JAPAN, vol. 7, no. 28, 4 February 1983, page (C-149)(1173); & JP-A-57-185314 (SANYUREJIN K.K.) 15-11-1982**

(73) Proprietor: **ARCO Chemical Company**
**1500 Market Street**
**Pennsylvania 19101 (US)**

(72) Inventor: **Cuscurida, Michael**
**3543 Greystone Drive**
**Austin Texas 78731 (US)**
Inventor: **Speranza, George Phillip**
**2800 Silverleaf Circle**
**Austin Texas 78757 (US)**
Inventor: **Dominguez, Richard Joseph Gilbert**
**3107 Canter Lane**
**Austin Texas 78759 (US)**

(74) Representative: **Cropp, John Anthony David et al**
**MATHYS & SQUIRE 10 Fleet Street**
**London, EC4Y 1AY (GB)**

(56) References cited:
**PATENT ABSTRACTS OF JAPAN, vol. 6, no. 219, 2 November 1982, page (C-132)(1097); & JP-A-57-121024 (IDEMITSU KOSAN K.K.) 28-07-1982**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 118 171 B1

Courier Press, Leamington Spa, England.

(56) References cited:

PATENT ABSTRACTS OF JAPAN, vol. 3, no. 63, 30 May 1979, page 152 C47; & JP-A-54-39441 (TOYODA GOSEI K.K.) 26-03-1979

PATENT ABSTRACTS OF JAPAN, vol. 3, no. 63, 30 May 1979, page 151 C47; & JP-A-54-39440 (TOYODA GOSEI K.K.) 26-03-1979

PATENT ABSTRACTS OF JAPAN, vol. 5, no. 49, 8 April 1981, page (C-49)(721); & JP-A-56-2314 (HITACHI SEISAKUSHO K.K.) 12-01-1981

## Description

The present invention relates to the production of polyols or isocyanurate prepolymers containing a separate polymer. It also relates to the production of polyurethanes from such compositions. The polyols of the invention are sometimes referred to hereinafter as polymer polyols; the isocyanate compositions are sometimes referred to hereinafter as polymer prepolymers.

Polyurethanes constitute a broad class of polymeric materials having a wide range of physical charactistics. The polymers are produced through the interaction of a polyfunctional isocyanate with a polyfunctional chemical compound having an active hydrogen in its structure, such as a polyester or polyether or mixtures of two or more of such materials. The materials conventionally used contain two or more hydroxyl groups and are thus generally termed polyols. In the preparation of flexible polyurethane foams, it is sometimes advantageous to employ a method known as the quasi-prepolymer method wherein a portion of the polyether polyol component is reacted with an excess of isocyanate. Then in a second step the quasi-prepolymer is mixed with the balance of the polyether polyol along with a blowing agent and catalyt to produce the polyurethane foam. The type of quasi-prepolymer using an excess of isocyanate is referred to hereinafter as an isocyanate terminated prepolymer.

It is known in the art that the addition of a high molecular weight polymer to polyurethane compositions will improve certain of the physical properties of the resulting polyurethane composition. There have been many efforts with respect to incorporating polymers into such polyurethane compositions. For example, US—A—3,383,351 discloses the *in situ* polymerization of an ethylenically unsaturated monomer in the presence of the polyol component of a polyurethane composition. Prior art techniques include the polymerisation of ethylenically unsaturated monomers in the presence of isocyanate-terminated prepolymers to form an isocyanate-terminated polymer prepolymer. A description of this technique may be found in US—A—3,968,089. Also, the preparation of graft copolymer dispersions by *in situ* polymerisation of a vinyl monomer in an unsaturated containing polyol is described, for example, in US—A—3,953,393.

GB—A—1194723 describes a process of producing a polydiene-polyether resin by forming a mixture of a polyfunctional polydiene prepolymer, a polyfunctional polyether, a polyfunctional chain extender capable of reacting with functional groups of both the extender capable of reacting with functional groups of both the polydiene prepolymer and the polydiether prepolymer, and a peroxide free radical initiator, and reacting the prepolymers with the chain extender to produce an elastomer containing unreacted initiator dispersed therethrough. This elastomeric material can then be cured to a hard thermoset resin by application of heat.

The invention permits a degree of freedom not found in the prior art technique in the formation of a polymer to form part of a polyurethane-forming component.

According to the present invention there is provided a method of producing a polyurethane-forming component containing a crosslinked polymer obtained from an ethylenically-unsaturated monomer characterised in that it comprises forming a mixture of an active component containing free hydroxyl or isocyanate groups and a cross-linkable liquid polymer obtained by polymerising ethylenically-unsaturated monomeric material in a medium differing from said active component, and crosslinking said liquid polymer in the presence of said active component and by interlinking molecules of the liquid polymer while maintaining the active component substantially unreacted, whereby to produce a composition comprising crosslinked polymer in a medium comprising said active component.

The present invention also relates to the use of the resulting compositions in the formation of polyurethanes by reaction with a polyisocyanate or a polyol respectively.

The invention disclosed herein is to polymerise a monomer in a chosen medium, stop the polymerisation at a chosen point and then disperse the relatively low molecular weight polymer in the active component (e.g. a polyol or isocyanate-terminated prepolymer), and susbequently to crosslink the polymer to the desired level. By this method, the microstructure of the initial polymer can be controlled by known techniques, including a judicious choice of medium along with choice of initiators for the initial polymerisation. This pre-engineered low molecular weight polymer is then dispersed in the active component and crosslinked to the appropriate level, retaining the structural characteristics built into it. The prior art which polymerizes the monomer in the active component does not allow for such engineering to be built into the polymer portion of the polymer polyol or polymer prepolymer.

The monomers useful in practising this invention are polymerizable ethylenically unsaturated monomers containing at least one polymerizable ethylenic group. The monomers can be used singly to produce a homopolymer or in combination to produce a copolymer.

These monomers are well known in the art and include hydrocarbon monomers, such as butadiene, isoprene, 1,4-pentadiene, 1,6-hexadiene, 1,7-octadiene, styrene, α-methylstyrene, butylstyrene, phenylstyrene, cyclohexylstyrene and benzylstyrene; substituted styrenes such as chlorostyrene, 2,5-dichlorostyrene, bromostyrene, fluorostyrene, nitrostyrene, N,N-dimethylaminostyrene, p-vinyl diphenyl sulfide and p-vinylphenyl oxide; acrylic and substituted acrylic monomers such as methyl acrylate, methyl methacrylate, cyclohexyl methacrylate, benzyl methacrylate, isopropyl methacrylate, octyl methacrylate, methacrylonitrile, methyl α-chloroacrylate, ethyl α-ethoxyacrylate, methyl α-acetaminoacrylate, butyl acrylate, 2-ethylhexyl acrylate, phenyl acrylate, phenyl methacrylate, and α-chloroacrylonitrile; vinyl esters

and vinyl ethers, such as vinyl acetate, vinyl chloroacetate, vinyl butyrate, isopropenyl acetate, vinyl formate, vinyl acrylate, vinyl methacrylate, vinyl methoxy acetate, vinyl benzoate, vinyl naphthalene, vinyl bromide, vinyl fluoride, vinylidene bromide, 1-chloro-1-fluoroethylene, vinylidene fluoride, vinyl methyl ether, vinyl ethyl ether, vinyl propyl ethers, vinyl butyl ethers, vinyl 2-ethylhexyl ether, vinyl phenyl ether, vinyl 2-methoxyethyl ether, methoxybutadiene, vinyl 2-butoxyethyl ether, 3,4-dihydro-1,2-pyran, 2-butoxy-2'-vinyloxy diethyl ether, vinyl 2-ethylmercaptoethyl ether, vinyl methyl ketone, vinyl ethyl ketone and vinyl phenyl ketone; dimethyl fumarate, dimethyl maleate, monomethyl itaconate, dimethylaminoethyl methacrylate, glycidyl acrylate, dichlorobutadiene, vinyl pyridine and hydroxyethyl methacrylate. The compounds listed above are illustrative and not restrictive of the monomers suitable for use in this invention.

The ethylenically unsaturated monomers which are preferred in the practice of this invention include hydrocarbon monomers such as butadiene, isoprene, styrene and α-methylstyrene; and acrylic and substituted acrylic monomers which are non-reactive with isocyanato groups, such as methyl acrylate, methyl methacrylate, acrylonitrile and methacrylonitrile.

The initial polymerization or copolymerization of these monomers to low molecular weight liquids is accomplished by a variety of techniques known in the art. These low molecular weight polymers should generally be of molecular weights from 1,800 to 8,000. One skilled in the art may choose the method of polymerization to provide a desired microstructure for this polymer. Free radical and cationic catalysts give polymers which are highly branched, while anionic and Ziegler-Natta catalysts yield products which have a more linear structure.

Preferred low molecular weight polymers are obtained by the anionic polymerization or copolymerization of ethylenically unsaturated monomers, the most preferred of which is butadiene. Such polymers include the LITHENE® liquid polymers of butadiene from Revertex Ltd., Temple Fields, Harlow, Essex, Great Britain. As described in product data, these preferred LITHENES are prepared by the anionic polymerization of butadiene. An organic lithium catalyst is used in a solvent. Toluene is described as a usual solvent, but is only one of many solvents which can be used. By anionic polymerization of butadiene monomer ($CH_2=CH—CH=CH_2$), three different types of structures are obtained.

$-CH_2-CH=CH-CH_2-$

1, 4-

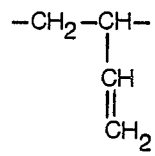

1, 2-

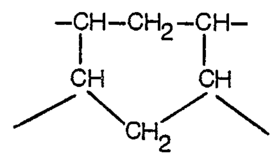

Cyclized

By controlling these structures by methods known in the art, the total microstructure of the polymer can be controlled. Therefore, those skilled in the art can choose what type of polymer they wish to then further crosslink in the active component.

Other types of low molecular weight liquid polymers preferred for crosslinking in a polyol are hydroxyl-terminated, have internal unsaturation and molecular weights from 1,800 to 8,000. The example, such polybutadiene and butadiene-ethylene copolymers include Poly bd Liquid Resins from ARCO Chemical Co., division of Atlantic-Richfield Co., which have the following published structures:

Homopolymers

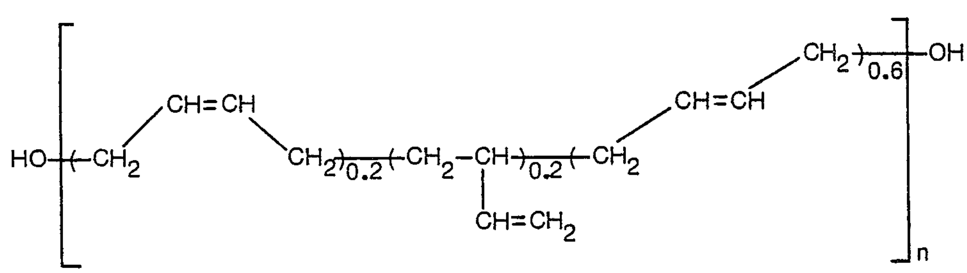

where n = 50.

Copolymers

$$HO-\left[-(CH_2-CH=CH-CH_2)_a-(CH-CH_2)_b-\right]_n-OH$$

where a=.75, b=.25 and n=54. These polymers are suggested for use as a component suitable for reaction with polyisocyanates to form polyurethanes.

In our invention these hydroxyl terminated polymers are suitable for crosslinking in the polyol just as the non-hydroxyl terminated polymers described above. The same monomer groups useful for polymerizing to the non-hydroxyl terminated polymers are useful for polymerizing to obtain hydroxyl terminated polymers. The method of making these materials is known in the art.

In one embodiment of the invention, the active components in which the *in situ* crosslinking of the liquid polymer is effected is isocyanate-terminated polyether-based prepolymer and is formed by the reaction of an organic polyisocyanate with a polyether polyol component. This results in a composition in which one isocyanato group of the polyisocyanate reacts with a hydroxyl group of the polyether polyol to produce a polyether-based prepolymer composition with terminal isocyanato groups. This isocyanate-terminated polyether-based prepolymer composition will have a negligible hydroxyl number indicating that all of the available hydroxyl groups have been reacted with isocyanato groups.

The polyether polyol components useful in preparing the polymer polyol composition include polyols having a functionality of from 2 to 6 and molecular weights of from 2,000 to 10,000, preferably from 2,000 to 7,000. These polyether polyols are prepared by a well known process which involves the reaction of a polyhydric initiator such as trimethylolpropane, glycerol, 1,2,6-hexanetriol, sorbitol or pentaerythritol, with an alkylene oxide, such as ethylene oxide, propylene oxide and butylene oxide, or mixtures of ethylene oxide with propylene oxide and/or butylene oxide. This reaction is carried out in a well known manner with an alkoxylation catalyst, generally an alkali metal hydroxide such as potassium hydroxide. The alkoxylation reaction is continued until the product attains the desired molecular weight.

Especially preferred polyether polyols are the polyether triols.

Preferred polyether diols are, for example, polypropylene glycols or mixed polypropylene glycol/polyethylene glycol copolymers having molecular weights from 2,000 to 5,000. These materials are produced by reacting ethylene oxide, propylene oxide, or a butylene oxide, either sequentially or in admixture with an initiator for example, ethylene glycol, propylene glycol or butylene glcyol.

Other preferred polyols are those made by incorporating an epoxy resin internally in the polyol. These polyols are described, for example, in US—A—4,316,991.

The polyisocyanate components which are useful in preparing the prepolymer compositions include isocyanates having two or more isocyanato groups per molecule. Examples of such isocyanates are tolene diisocyanates, such as the 2,4- and 2,6-isomers; and their mixtures, methylene bis(phenylisocyanates), such as the 2,2′-, 2,4′- and 4,5′-isomers and mixtures thereof. Other representative aromatic isocyanates include 1,5-napthylene diisocyanate, phenyl diisocyanate and xylylene diisocyanate, trimethylhexamethylene diisocyanate, lysine diisocyanate methyl ester, methylene bis(cyclohexylisocyanate) and its various isomers and mixtures thereof. Mixtures of diisocyanates and polymeric isocyanates can be employed. Exemplary mixtures are described in US—A—3,362,979. Typical of the isocyanates generally used in preparation of polyurethane foams include toluene diisocyanates, and polymethylene polyphenyl polyisocyanates having a functionality of from 2.1 to 3.0. Diphenylmethane diisocyanates and various aliphatic isocyanates or any of the above-mentioned isocyanates can be suitably employed in the preparation of the isocyanate terminated polyether-based prepolymers employed in this invention.

In preparing the isŏcyanate-terminated polyether-based prepolymer compositions, the polyisocyanate and the polyether polyol are combined in amounts such that there is an excess of the organic polyisocyanate employed. Generally, an equivalent ratio of isocyanato groups to hydroxy groups, commonly known as the isocyanate index of from 25 to 2 is satisfactory, with an isocyanate index of from 20 to 4 being preferred. The organic polyisocyanate is generally reacted with the polyether polyol under an inert atmosphere, at an elevated reaction temperature, e.g. 50° to 150°, with a temperature of approximately 100°C being preferred, until all of the hydroxyl groups have been treated with isocyanato groups to form the pre-polymer composition.

The active component and the pre-engineering low molecular weight liquid polymer are mixed together or dispersed and the liquid polymer is then further crosslinked by catalysis; for example, using free radical catalysts or azo compounds. This crosslinking technique is generally carried out under the following conditions.

The crosslinking of the pre-engineered liquid polymer typically takes place at 100 to 150°C, with a preferred temperature of 110 to 140°C. The crosslinking may take place at atmospheric or near atmospheric conditions.

The non-limiting Examples which follow will illustrate the practice of our invention.

Example 1

This example illustrates the preparation of NCO group-containing compositions of this invention.

Into a 1-liter three-necked flask equipped with a stirrer, thermometer, reflux condenser and nitrogen source were charged 250 g of a 5,000 molecular weight ethylene oxide/propylene oxide adduct of glycerol (THANOL® SF—5505; Texaco Chemical Co.), 250 g of a polymeric isocyanate (PAPI® 901; Upjohn Co.) 55.5 g of a liquid polymer of butadiene (LITHENE N4—5000; Revertex Ltd.) and 5.55 g of 2,5-dimethyl-2,5-di(t-butylperoxy)hexane (LUPERSOL® 101; Lucidol Div., Pennwalt Corp.). Maintaining a nitrogen purge, the reaction mixture was heated at 130 to 135°C for three hours. The product was then stabilised with 0.5 g of 2,6-di-t-butyl-4-sec-butyl phenol (ISONOX® 132; Schenectady Chemical Co.). The finished product was a dark, viscous liquid which had the following properties.

| | |
|---|---|
| Isocyanate content, meq/g | 2.83 |
| Equivalent weight | 353.3 |
| Viscosity, 25°C, (cps | 16100) |
| Pa.s | 16.1 |

Example 2

This example illustrates the use of the isocyanate group-containing composition of Example 1 in the preparation of moisture-cured adhesives. It further shows the improved properties of adhesives made from the product as compared to one made by reaction of an equivalent weight mixture of THANOL SF—5505 polyol and PAPI 901 isocyanate for three hours at 90°C. The latter product had an isocyanate content of 3.25 meq/g (e.w. 307.6) and a viscosity of 5.6 Pa.s (5600 cps) at 25°C.

To 100 g of the product of Example 1 were added 20 g of DARCO® G—60 carbon black and 2.5 g of CAB—O—Sil (colloidal silica). The mixture was then thoroughly dispersed with a high shear mixer. This adhesive (A) exhibited thixotropic properties. A similar adhesive (B) made from the THANOL SF—5505/PAPI 901 prepolymer had a tendency to flow. After curing for one week at ambient conditions, adhesive A had a tensile shear (aluminum-to-aluminum as determined by ASTM—1002) of 6.254 MPa as compared to 4.678 MPa for the cured adhesive B.

Example 3

This example illustrates the use of the product of Example 1 in a flexible foam formulation. It further shows that faster curing foams with comparable properties can be prepared from this product as compared to those made from a THANOL SF—5505/PAPI 901 prepolymer.

| | A | B |
|---|---|---|
| Formulation, pbw | | |
| THANOL® SF—5505 | 50 | 50 |
| Water | 3.0 | 3.0 |
| THANCAT® TD—33[1] | 0.3 | 0.3 |
| THANCAT DM—70[2] | 0.25 | 0.25 |
| NIAX® A—1[3] | 0.12 | 0.12 |
| Polymer prepolymer[4] | 134.25 | — |
| Prepolymer[5] | — | 116.9 |
| Isocyanate index | 1.05 | 1.05 |
| Details of Preparation | | |
| Cream time, seconds | 12 | 12 |
| Rise time, seconds | 135 | 150 |
| Gel time, seconds | 150 | 195 |
| Properties | | |
| Density, g/cm$^3$ | 0.07 | 0.05 |
| Tensile, MPa | 0.133 | 0.121 |
| Elongation, % | 49 | 63 |
| Tear, N/m | 2.31 | 2.14 |
| Compression set (Method B) | | |
| 50% | 11.7 | 8.5 |
| 75% | 9.5 | 5.7 |

[1]33% triethylenediamine in propylene glycol- Texaco Chemical Co.
[2]70% dimorpholinodiethyl ether/30% dimethylpiperazine; Texaco Chemical Co.
[3]Bis(dimethylaminoethylether); Union Carbide Chemical Corp.
[4]Product of Example 1, isocyanate content, meq/g 2.83
[5]50:50 THANOL SF—5505/PAPI 901; isocyanate content 3.25 meq/g

Example 4

Into a 1-liter three-necked flask, equipped with a stirrer, thermometer, condenser and nitrogen source were charged 320 g of a 5,500 molecular weight propylene oxide/ethylene oxide (PO/EO) adduct of glycerol (THANOL SF—5505) 80 g of a 5,000 molecular weight butadiene liquid polymer (LITHENE N4—5000) and 4.0 g of 2,5-dimethyl-2,5-di(-butylperoxy)hexane (LUPERSOL 101). Maintaining a nitrogen purge, the reaction mixture was heated at 125 to 135°C for five hours. The product was then stabilized with 1.3 g of 2,6-di-t-butyl-4-sec-butyl phenol (ISONOX 321). The finished product was a white, opaque, viscous liquid which had the following properties. This polymer polyol has been stable for three months in glass.

| | |
|---|---|
| Acid number, mg KOH/g | 0.015 |
| Hydroxyl number, mg KOH/g | 32.6 |
| Water, wt.% | 0.01 |
| pH, 10:6 isopropanol/water | 6.8 |
| Viscosity, 25°C, (cps | 3720) |
| Pa.s | 3.72 |

A physical mixture of the above reactants had an initial viscosity of 1.8 Pa.s (1800 cps) at 25°C and phase separated within a few days.

Example 5

This example will illustrate a scale-up of the preparation according to Example 4. Into a 30 liter reactor were charged 3.63 Kg of THANOL SF—5505 polyol, 0.91 Kg of LITHENE N4—5000 and 45.4 g of LUPERSOL 101. The reactor was then evacuated and purged with pre-purified nitrogen. It was then heated at 128 to 130°C for three hours. The reaction was monitored by measuring the viscosity after each hour of reaction. Results were as follows.

| Time, Hour | Viscosity, 25°C, (cps) | Pa.s |
|---|---|---|
| 0 | 1860 | 1.86 |
| 1 | 2100 | 2.1 |
| 2 | 2100 | 2.1 |
| 3 | 2340 | 2.34 |

The product was then stabilized with 6.8 g of di-t-butyl-p-cresol. Basis GPC the product contained 10 area percent of a polymer which had 2—3 times the molecular weight of the starting materials.

Example 6

This example illustrates the use of the polybutadiene polymer polyol of Example 5 in the preparation of RIM elastomers. It further shows the improved hydrolytic stability and heat sag properties of elastomers prepared using these materials. These elastomers were prepared using an Accuratio machine.

| | A | B | C | D |
|---|---|---|---|---|
| Formulation, pbw | | | | |
| B-Component | | | | |
| THANOL SF—5505[1] | 12.8 | 14.4 | 15.2 | 16.0 |
| Polybutadiene polymer[2] | 3.2 | 1.6 | 0.8 | — |
| Ethylene glycol | 6.44 | 6.44 | 6.44 | 6.44 |
| PLURONIC® F—98[3] | 0.22 | 0.22 | 0.22 | 0.22 |
| THANCAT DME[4]0.2 | 0.2 | 0.2 | 0.2 | 0.2 |
| Dibutyltin dilaurate[5] | 0.015 | 0.015 | 0.015 | 0.015 |
| FOMREZ® UL—29[6] | 0.025 | 0.025 | 0.025 | 0.025 |
| A-Component | | | | |
| ISONATE® 143L[7] | 29.49 | 29.49 | 29.49 | 29.49 |
| Quasi-prepolymer[8] | 5.72 | 5.72 | 5.72 | 5.72 |
| Isocyanate index | 1.04 | 1.04 | 1.04 | 1.04 |
| Properties of Elastomer: Hydrolytic stability, (1 week in water at room temp.) | | | | |
| Postcure 121°C | | | | |
| ΔL | 0.035 | 0.023 | 0.034 | 0.042 |
| ΔWt | 0.45 | 0.46 | 0.51 | 0.57 |
| Postcure 163°C | | | | |
| ΔL | 0.035 | 0.043 | 0.029 | 0.052 |
| ΔWt | 0.45 | 0.58 | 0.57 | 0.60 |
| Heat sag, mm (163°C/30 min) | | | | |
| 15.25 cm overhang | 11.05 | 14.60 | 16.51 | 19.18 |
| Heat sag, mm (121°C/30 min) | | | | |
| 10.2 cm overhang | — | 0.76 | 2.03 | 4.32 |

[1]5,500 molecular weight PO/EO adduct of glycerin; Texaco Chemical Co.
[2]From Example 4.
[3]11,000 molecular weight 80:20 EO/PO diol; BASF Wyandotte.
[4]Dimethylaminoethanol; Texaco Chemical Co.
[5]SUL—4; Witco Chemical Co.
[6]Thioorganotin Compound; Witco Chemical Co.
[7]Liquid MDI; Upjohn Chemical Co.
[8]Isocyanate rich quasi-prepolymer; THANATE L—55—O; Texaco Chemical Co.

Example 7

This example illustrates the use of polybutadiene polymer polyol (prepared as in Example 4) in the preparation of high resilience (HR) foams. It further shows the overall good properties of the foams. Formulation, details of preparation and properties are as follows.

| | A |
|---|---|
| Formulation, pbw | |
| THANOL SF—5505 | 60. |
| Polybutadiene polymer polyol | 40 |
| Water | 2.8 |
| Q2—5043 silicone[1] | 2.0 |
| THANCAT TD—33[2] | 0.25 |
| NIAX A—1[3] | 0.25 |
| THANCAT DM—70[4] | 0.25 |
| Dibutyltin dilaurate | 0.01 |
| 80:20 TDI/PAPI[5] | 35.1 |
| Isocyanate index | 1.02 |
| Details of Preparation | |
| Cream time, seconds | 6 |
| Rise time, seconds | 120 |
| Gel time, seconds | 195 |
| Properties | |
| Density, g.cm[3] | 0.038 |
| Tensile, MPa | 0.092 |
| Elongation, % | 119 |
| Tear, N/m | 2.28 |
| Compression set, 50% | 21.1 |
| 95% | 18.2 |
| Humid Aging (5 hours at 121°C) | |
| Compression set, % | 22.1 |
| CLD loss, 50% | 9.99 |

[1]A product of Dow-Corning Corp.
[2]33% triethylenediamine in propylene glycol; Texaco Chemical Co.
[3]bis-dimethylaminoethyl ether; Union Carbide Chemical Co.
[4]70% dimorpholinodiethyl ether/30% N,N'-dimethylpiperazine; Texaco Chemical Co.
[5]2.7 functionality polymeric isocyanate; a product of Mobay Chemical Co.
[6]Compression Load Deflection.

Example 8

This example illustrates the polymerisation of a hydroxyl terminated polybutadiene liquid polymer in THANOL SF—5505 polyol.

Into a 1-liter three-necked flask, equipped with a stirrer, thermometer, condenser and nitrogen source were charged 400 g of THANOL SF—5505 polyol, 100 g of hydroxy terminated polybutadiene liquid polymer (Poly bd R—45M; ARCO Chemical Co.) and 5.0 g LUPERSOL 101. At this point the reactants had a viscosity of 1340 cps at 25°C. Maintaining a nitrogen purge, the reactants were heated 4.75 hours at 128—135°C. The reaction mixture was then cooled and stabilized with 0.5 g of ISONOX 132. The finished product was a white, opaque, viscous liquid which had the following properties.

| | |
|---|---|
| Acid number, mg KOH/g | 0.13 |
| Hydroxyl number, mg KOH/g | 36.6 |
| Water, wt.% | 0.01 |
| Viscosity, 25°C, (cps | 6300) |
| Pa.s | 6.3 |
| Peroxide, ppm | 1.95 |

Example 9

Into a 1-liter three-necked flask, eqipped with a stirrer, thermometer, condenser and nitrogen source were charged 400 g of a 3,500 molecular weight propylene oxide/ethylene oxide/diglycidyl ether of Bisphenol A adduct of glycerol, 100 g of a 5,000 molecular weight butadiene liquid polymer (LITHENE N4—5000) and 5.0 g of LUPERSOL 101. Maintaining a nitrogen purge, the reaction mixture was heated at 125 to 135°C for three hours. The product was then stabilized with 0.75 g of di-t-butyl-p-cresol. The finished product was a white, opaque, viscous liquid which had the following properties.

| | |
|---|---|
| Hydroxyl number, mg KOH/g | 42.3 |
| Viscosity, 25°C, (cps. | 1538) |
| Pa.s | 1.538 |

A physical mixture of the above reactants had a viscosity of 1.275 Pa.s (1275 cps) at 25°C.

Example 10

This example will show the use of the polymer polyol of Example 9 in the preparation of flexible foam. It will further show the improved load bearing properties of foams made from this polyol as compared to those prepared from a 3,000 molecular weight propylene oxide/ethylene oxide of glycerol (THANOL F—3016) and the base polyol of Example 9. Load bearing properties were measured using a Chatillon gauge (33% indentation).

Formulations, details of preparation and foam properties are shown below.

| | A | B | C | D |
|---|---|---|---|---|
| Formulation, pbw | | | | |
| THANOL F—3016 | 100 | — | 75 | — |
| 3,500 m.w. polyol of Ex. 9 | — | 100 | — | 75 |
| Butadiene polymer polyol | — | — | 25 | 25 |
| Water | 4.0 | 4.0 | 4.0 | 4.0 |
| L—6202 silicone[1] | 1.0 | 1.0 | 1.0 | 1.0 |
| Stannous octoate (50% active) | 0.5 | 0.5 | 0.5 | 0.5 |
| THANCAT TD—33[2] | 0.3 | 0.3 | 0.3 | 0.3 |
| Toluene diisocyanate | 49.7 | 48.4 | 49.7 | 48.2 |
| Isocyanate index | 1.05 | 1.05 | 1.05 | 1.05 |
| Details of Preparation | | | | |
| Cream time, seconds | 12 | 12 | 12 | 12 |
| Rise time, seconds | 75 | 94 | 92 | 93 |
| Properties | | | | |
| Density, g.cm[3] | 0.025 | 0.026 | 0.026 | 0.027 |
| Chatillon gauge[3] (reading at 44% indentation, Kg) | 2.588 | 2.928 | 2.815 | 3.382 |

[1]A product of Union Carbide Corp.
[2]Triethylenediamine in propylene glycol; a product of Texaco Chemical Co.
[3]Manual Model LIC compression tester, manufactured by John Chatillon and Sons.

## Claims

1. A method of producing a polyurethane-forming component containing a crosslinked polymer obtained from an ethylenically-unsaturated monomer characterised in that it comprises forming a mixture of an active component containing free hydroxyl or isocyanate groups and a crosslinkable liquid polymer obtained by polymerising ethylenically-unsaturated monomeric material in a medium differing from said active component, and crosslinking said liquid polymer in the presence of said active component and by interlinking molecules of the liquid polymer while maintaining the active component substantially unreacted, whereby to produce a composition comprising crosslinked polymer in a medium comprising crosslinked polymer in a medium comprising said active component.

2. A method in a medium according to claim 1 characterised in that the molecular weight of the liquid polymer is in the range 1800 to 8000.

3. A method according to claim 1 or claim 2 characterised in that the liquid polymer is a butadiene polymer.

4. A method according to claim 3 characterised in that the butadiene polymer is a butadiene homopolymer.

5. A method according to claim 3 characterised in that the butadiene polymer is a hydroxyl-terminated butadiene-ethylene copolymer.

6. A method according to any one of claims 1 to 5 characterised in that the active component is a polyether polyol having a functionality from 2 to 6 and a molecular weight of from 2000 to 10,000.

7. A method according to any one of claims 1 to 5 characterised in that the active component is a polyol modified with an epoxy resin.

8. A method according to any one of claims 1 to 4 characterised in that the active component is an isocyanate-terminated prepolymer formed by reacting an excess of polyisocyanate with a polyether polyol.

9. A method according to any one of claims 1 to 7 characterised in that the active component is an

isocyanate-terminated prepolymer formed by reacting an excess of polyisocyanate with a polyol modified with an epoxy resin.

10. The use of a polyurethane-forming component according to any one of claims 1 to 9 in the formation of polyurethanes by reaction with a polyisocyanate or a polyol.

**Patentansprüche**

1. Verfahren zur Herstellung einer polyurethanbildenden Komponente, die ein quervernetztes Polymer enthält, das man aus einem ethylenisch ungesättigten Monomer erhält, gekennzeichnet dadurch, daß man eine Mischung aus einer aktiven Komponente, die freie Hydroxyl- oder Isocyanatgruppen enthält, und einem quervernetzbaren flüssigen Polymer, erhalten durch Polymerisation von ethylenisch ungesättigtem Monomer- material in einem von der aktiven Komponente verschiedenen Medium, herstellt, und das flüssige Polymer in Gegenwart der aktiven Komponente quervernetzt und durch Verketten der Moleküle des flüssigen Polymers während die aktive Komponente im wesentlichen unreagiert gehalten wird, wobei man eine Zusammensetzung herstellt, die quervernetztes Polymer in einem Medium enthält, das die aktive Komponente enthält.

2. Verfahren nach Anspruch 1, dadurch gekennzeichnet, daß das Molekulargewicht des flüssigen Polymers im Bereich von 1800 bis 8000 liegt.

3. Verfahren nach Anspruch 1 oder 2, dadurch gekennzeichnet, daß das flüssige Polymer ein Butadien Polymer ist.

4. Verfahren nach Anspruch 3, dadurch gekennzeichnet, daß das Butadien Polymer ein Butadien Homopolymer ist.

5. Verfahren nach Anspruch 3, dadurch gekennzeichnet, daß das Butadien Polymer ein Butadien-Ethylen Copolymer mit einer endständigen Hydroxylgruppe ist.

6. Verfahren nach einem der Ansprüche 1 bis 5, dadurch gekennzeichnet, daß die aktive Komponente ein Polyetherpolyol mit einer Funktionalität von 2 bis 6 und einem Molekulargewicht von 2000 bis 10000 ist.

7. Verfahren nach einem der Ansprüche 1 bis 5, dadurch gekennzeichnet, daß die aktive Komponente ein mit einem Epoxyharz modifiziertes Polyol ist.

8. Verfahren nach einem der Ansprüche 1 bis 4, dadurch gekennzeichnet, daß die aktive Komponente ein Prepolymer mit einer enständigen Isocyanatogruppe ist, die durch Umsetzen eines überschusses von Polyioscyanat mit einem Polyetherpolyol gebildet wird.

9. Verfahren nach einem der Ansprüche 1 bis 7, dadurch gekennzeichnet, daß die aktive Komponente ein Prepolymer mit einer endständigen Isocyanatgruppe ist, die durch Umsetzen eines überschusses von Polyisocyanat mit einem Epoxyharz modifizierten Polyol gebildet wird.

10. Verwendung einer polyurethanbildenden Komponente nach einem der Ansprüche 1 bis 9 bei der Bildung von Polyurethanen durch Reaktion mit einem Polyisocyanat oder einem Polyol.

**Revendications**

1. Procédé de production d'un composant formant un polyuréthane contenant un polymère réticulé obtenu à partir d'un monomère éthyléniquement insaturé, caractérise en ce qu'il comprend la formation d'un mélange d'un composant actif contenant des groupes hydroxy ou isocyanates libres et d'un polymère liquide réticulable obtenu par polymérisation d'un monomère éthyléniquement insaturé dans un milieu autre que ce composant actif, et la réticulation de ce polymère liquide en présence de ce composant actif et par des molécules de jonction du polymère liquide tandis que le composant actif est maintenu pratiquement à l'état n'ayant pas réagi, de façon à produire une composition comprenant un polymère réticule dans un milieu comprenant ce composant actif.

2. Procédé suivant la revendication 1, caractérisé en ce que le poids moléculaire du polymère liquide est dans la gamme de 1.800 à 8.000.

3. Procédé suivant la revendication 1 ou la revendication 2, caractérisé en ce que le polymère liquide est un polymère de butadiène.

4. Procédé suivant la revendication 3, caractérisé en ce que le polymère du butadiène est un homopolymère de butadiène.

5. Procédé suivant la revendication 3, caractérisé en ce que le polymère du butadiène est un copolymère de butadène-éthylène à terminaison hydroxy.

6. Procédé suivant l'une quelconques des revendications 1 à 5, caractérisé en ce que le composant actif est un polyéther polyol ayant une fonctionalité de 2 à 6 et un poids moléculaire de 2.000 à 10.000.

7. Procédé suivant l'une quelconques des revendications 1 à 5, caractérisé en ce que le composant actif est un polyol modifié par une résine époxy.

8. Procédé suivant l'une quelconques des revendications 1 à 4, caractérisé en ce que le composant actif est un prépolymère à terminaison isocyanate formé par la réaction d'un excès de polyisocyanate avec un polyéther polyol.

9. Procédé suivant l'une quelconques des revendications 1 à 7, caractérisé en ce que le composant actif est un prépolymère à terminaison isocyanate formé par la réaction d'un excès de polyisocyanate avec un polyol modifié par une résine époxy.

10. Utilisation d'un composant formant un polyuréthane suivant l'une quelconque des revendications 1 à 9 dans la formation de polyuréthanes par réaction avec un polyisocyanate ou un polyol.